# EUROPÄISCHE PATENTSCHRIFT

(11) **EP 2 085 260 B1**
(45) Veröffentlichungstag und Bekanntmachung des Hinweises auf die Patenterteilung: **18.03.2015**
(21) Anmeldenummer: 09000996.0
(22) Anmeldetag: 24.01.2009
(51) Int. Cl.: B60J 5/04, B62D 29/00

(54) **Verstärktes Wandbauteil, insbesondere für ein Kraftfahrzeug**
Reinforced wall component, in particular for a motor vehicle
Composant mural renforcé, en particulier pour un véhicule automobile

(30) Priorität: 31.01.2008 DE 102008006850
(43) Veröffentlichungstag der Anmeldung: 05.08.2009
(73) Patentinhaber: Bayerische Motoren Werke Aktiengesellschaft, 80809 München (DE)
(72) Erfinder: Lischo, Bernd, 82362 Weilheim (DE)

(56) Entgegenhaltungen:
- EP-A2- 0 879 720
- EP-A2- 1 074 457
- WO-A1-99/64287
- WO-A1-2004/067305
- DE-A1- 3 033 692
- DE-A1- 4 317 315
- US-A- 3 964 208

## Beschreibung

Die Erfindung betrifft ein verstärktes Wandbauteil, insbesondere für ein Kraftfahrzeug, mit den im Oberbegriff des Patentanspruches 1 angegebenen Merkmalen.

Ein derartiges Wandbauteil ist in der EP 1 086 012 B1 ein Bauteil eines Kraftfahrzeugs, insbesondere eine A-Säule, B-Säule, C-Säule, D-Säule, ein Motorträger, Heckträger, Dachquerträger, Dachholm, Rahmenteil, Fahrwerksteil oder dergleichen. Zur Verstärkung des Wandbauteiles ist der Hohlraum des Wandbauteiles mit einem Metallschaum aus Zink oder einer Zinklegierung derart gefüllt, dass sich das Volumen des Metalls bei der Umwandlung zu dem Metallschaum 1:8 vergrößert. In dem unabhängigen Patentanspruch ist angegeben, dass der Hohlraum mit dem Metallschaum zumindest teilweise ausgeschäumt wird. Sollte der Hohlraum derart teilweise mit dem Metallschaum gefüllt sein, dass der Metallschaum an einer den Hohlraum begrenzenden Innenseite nicht anliegt, so kann der Metallschaum mit dieser Innenseite keine Verbindung bilden, wodurch das Wandbauteil geschwächt ist. Bei dem Ausführungsbeispiel, das auf eine A-Säule eines Kraftfahrzeugs bezogen ist, erstreckt sich der Hohlraum des Wandbauteiles von einem Außenblech bis zu einem Innenblech der A-Säule und ist zumindest in Quer- und Höhenrichtung vollständig von dem Metallschaum gefüllt, wodurch das Gewicht der A-Säule und damit des Kraftfahrzeugs sowie der Treibstoffverbrauch des Kraftfahrzeugs erhöht sind. Eine serienmäßige Verwendung eines derartigen Wandbauteiles, das bei einer seitlichen Anordnung mehrfach am Kraftfahrzeug verwendet ist, erfordert den Einsatz einer großen Menge des Metalls Zink.

Ferner zeigt die EP 1 074 457 A2 eine Säule einer Kraftfahrzeugkarosserie bestehend aus einem äußeren Paneel und einem inneren Paneel, zwischen denen ein zwischenliegendes Paneel angeordnet ist. Zwischen dem äußeren Paneel und dem zwischenliegenden Paneel ist ein expandierter Füllstoff ausgebildet. Das zwischenliegende Paneel weist sich in Längsrichtung erstreckende Waben bzw. Rillen auf. Der Füllstoff kann aus Aluminiumschaum bestehen.

Der Erfindung liegt die Aufgabe zu Grunde, ein verstärktes Wandbauteil, insbesondere für ein Kraftfahrzeug, mit den Merkmalen im Oberbegriff des Patentanspruches 1 anzugeben, das eine geringe Menge des für die metallische Füllung verwendeten Metalls erfordert und das einfach herstellbar ist, wobei ein Hohlraum des verstärkten Wandbauteils zuverlässig mit der metallischen Füllung gefüllt ist.

Diese Aufgabe ist durch die im Patentanspruch1 angegebenen Merkmale gelöst. Vorteilhafte Ausgestaltungen der Erfindung sind den Unteransprüchen entnehmbar.

Das erfindungsgemäße Wandbauteil weist zwischen der äußeren und der inneren Außenfläche eine Zwischenwand auf, die im Wesentlichen etwa parallel zur äußeren oder inneren Außenfläche verläuft. Der von einer metallischen Füllung gefüllte Hohlraum ist lediglich zwischen der äußeren Außenfläche und der Zwischenwand gebildet. Der Raum zwischen der Zwischenwand und der inneren Außenfläche ist normal nicht von einer metallischen Füllung gefüllt, wodurch dieser Raum zur Aufnahme von Bauteilen verwendbar ist und/oder das Wandbauteil kleiner gestaltet sein kann und in den mit einer metallischen Füllung gefüllten Hohlraum entsprechend weniger Metall zur Bildung einer metallischen Füllung einzufüllen ist. Die metallische Füllung kann eine feste Verbindung mit der äußeren Außenfläche und mit der Zwischenwand eingehen, wodurch das Wandbauteil ein geringes Gewicht und eine hohe Festigkeit aufweist. Die Festigkeit des Wandbauteiles ist noch dadurch wesentlich erhöht, dass in der Zwischenwand wenigstens eine zu der inneren Außenfläche gerichtete, eine Längserstreckung aufweisende nutförmige Vertiefung ausgebildet ist, die ebenfalls von der metallischen Füllung gefüllt ist. Durch eine Verwendung mehrerer nutförmiger Vertiefungen und eine Erhöhung ihrer jeweiligen Längserstreckung und/oder Tiefe kann die Festigkeit des Wandbauteiles in einem weiten Bereich erhöht und an die zu erwartende Belastung angepasst werden. Die wenigstens eine nutförmige Vertiefung ist lediglich lokal ausgebildet und dadurch mit einer geringen Menge der metallischen Füllung zu füllen. Ist die metallische Füllung ein Metallschaum, so ist auf Grund der Quellfähigkeit des Metallschaumes für den Metallschaum lediglich eine geringe Menge Metall erforderlich.

Gemäß einem Vergleichsbeispiel, das nicht durch den Patentanspruch 1 abgedeckt ist, kann das für die metallische Füllung bzw. den Metallschaum erforderliche Metall dadurch weiter vermindert sein, dass in die metallische Füllung bzw. den Metallschaum kleine hohle Keramikkugeln oder Glaskugeln eingebracht sind, die beispielsweise einen Durchmesser von 0,8 bis 3 mm aufweisen. Die Glaskugeln können aus Altglas gefertigte Blähglaskugeln sein, die auf dem Markt äußerst günstig zu erhalten sind. Ein derartiges Wandbauteil kann eine hohe Festigkeit sowie ein geringes Gewicht und Bauvolumen aufweisen, das in dem von der metallischen Füllung bzw. dem Metallschaum jeweils nicht gefüllten Bauraum eine Anordnung weiterer oder größerer Bauteile ermöglicht.

Zwei Ausführungsbeispiele der Erfindung werden anhand einer Zeichnung näher erläutert. Es zeigen
- Fig. 1: ein Vergleichsbeispiel eines verstärkten Wandbauteiles, das eine seitliche Fahrzeugtür eines Kraftfahrzeugs ist,
- Fig. 2: ein vereinfachter vertikaler Schnitt durch die in Fig. 1 dargestellte Fahrzeugtür und
- Fig. 3: ein weitgehend mit Fig. 1 übereinstimmendes Ausführungsbeispiel der vorliegenden Erfindung, bei dem der Metallschaum anders gebildet ist.

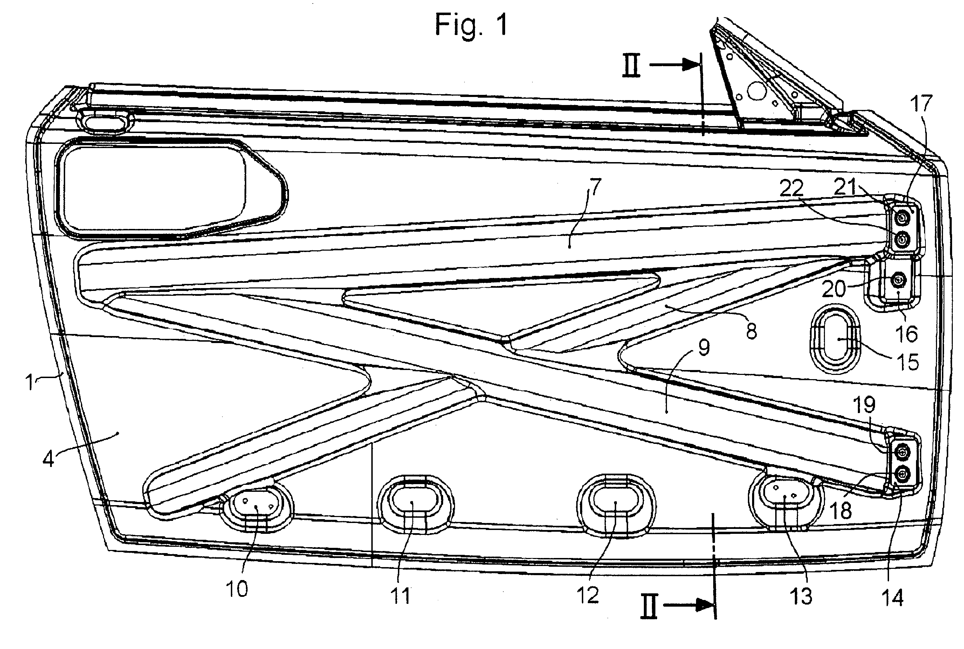

In Fig. 1 ist ein verstärktes Wandbauteil eine seitliche Fahrzeugtür eines Kraftfahrzeugs, die in einer Seitenansicht auf die Innenseite der Fahrzeugtür vereinfacht dargestellt ist, gemäß einem Vergleichsbeispiel, das nicht durch die Erfindung abgedeckt ist.

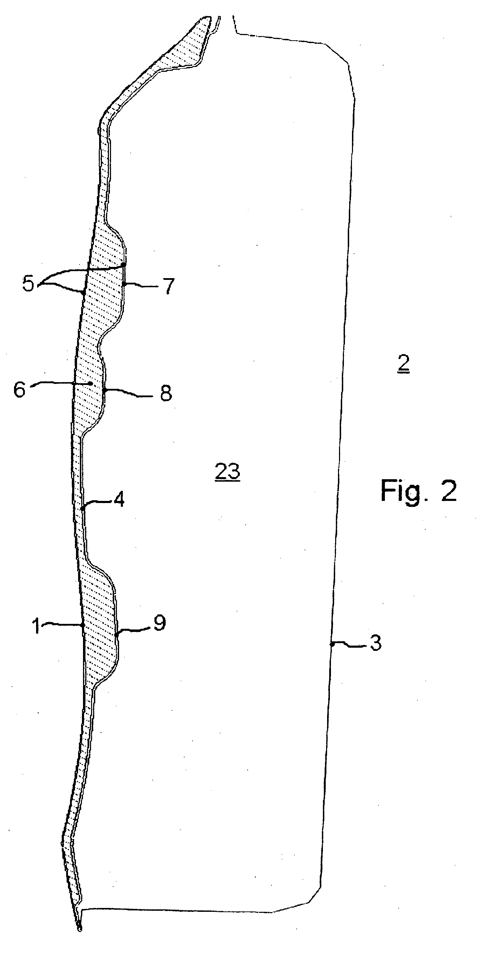

Wie insbesondere Fig. 2 zu entnehmen ist, weist die Fahrzeugtür eine äußere Außenfläche 1 und eine dem Fahrgastraum 2 zugewandte innere Außenfläche 3 auf, zwischen denen eine Zwischenwand 4 angeordnet ist, die im Wesentlichen teilweise gerade und teilweise gekrümmt jeweils etwa parallel zur äußeren Außenfläche 1 und inneren Außenfläche 3 verläuft. Zwischen der äußeren Außenfläche 1 und der Zwischenwand 4 ist ein Hohlraum 5 gebildet, der von einem durch eine Schraffur gekennzeichneten Metallschaum 6 gefüllt ist. In der Zwischenwand 4 sind mehrere zu der inneren Außenfläche 3 gerichtete nutförmige Vertiefungen 7, 8, 9 ausgebildet, die jeweils eine vorgegebene Längserstreckung mit einer gleichen oder veränderlichen Nuttiefe aufweisen, in die der Metallschaum 6 eingedrungen ist. Die äußere Außenfläche 1 des Wandbauteils bildet eine Außenseite der Fahrzeugtür. Die innere Außenfläche 3 des Wandbauteils ist eine dem Fahrgastraum 2 zugewandte Innenseite der Fahrzeugtür, die von einer Verkleidung überdeckt sein kann.

Wie den Figuren 1 und 2 entnommen werden kann, ist im oberen Bereich der Zwischenwand 4 die etwa in Fahrzeuglängsrichtung verlaufende, zur inneren Außenfläche 3 gerichtete nutförmige Vertiefung 7 ausgebildet. Darunter sind die beiden etwa in der Flächenmitte der Zwischenwand 4 sich kreuzenden, zur inneren Außenfläche 3 gerichteten nutförmigen Vertiefungen 8 und 9 ausgebildet, die etwa im unteren Bereich der Zwischenwand 4 enden und jeweils an ihrem oberen Bereich in die etwa in Fahrzeuglängsrichtung verlaufende Vertiefung 7 münden. Dabei bilden die Vertiefungen 7, 8, 9 an den Verbindungsbereichen und im Kreuzungsbereich eine gemeinsame Vertiefung.

Wie Fig. 1 zu entnehmen ist, sind in der Zwischenwand 4 durch mehrere kegelstumpfförmige Vertiefungen mit jeweils einem etwa elliptischen Querschnitt mehrere zur inneren Außenfläche 3 gerichtete Vertiefungsdome 10, 11, 12, 13, 14, 15, 16, 17 gebildet.

Die äußere Außenfläche 1 des Wandbauteiles und die Zwischenwand 4 sind jeweils am Außenumfang aneinander anliegend miteinander verbunden. Dies kann beispielsweise durch Umbördelung eines Umfangsbereiches der äußeren Außenfläche 1 um den äußeren Umfangbereich der Zwischenwand 4 herum erfolgen. Eine andere Verbindung ist ebenfalls möglich.

Bei dem Vergleichsbeispiel gemäß den Figuren 1 und 2 ist der in Fig. 2 erkennbare Hohlraum 5 mit einem Metallschaum 6 gefüllt, in den kleine, nicht dargestellte hohle Keramikkugeln oder Glaskugeln eingebracht sind, die vorzugsweise einen Durchmesser etwa zwischen 0,8 und 3 mm aufweisen. Die Keramikkugeln oder Glaskugeln sind auf einem nicht näher dargestellten Formkörper beispielsweise mittels einem Wachs oder Kleber befestigt. Der Formkörper ist vor einer Verbindung der äußeren Außenfläche 1 des Wandbauteiles mit der Zwischenwand 4 in den Hohlraum 5 eingebracht. Der Metallschaum 6 ist im Wesentlichen ein Zinkschaum. Ebenso könnte der Metallschaum auch ein im Wesentlichen aus Aluminium oder einem anderen Metall gefertigter Metallschaum sein. Das für den Metallschaum verwendete Metall kann auch durch eine Metalllegierung, beispielsweise eine Zinklegierung oder Aluminiumlegierung gebildet sein. Die äußere Außenfläche 1 des Wandbauteiles und/oder die Zwischenwand 4 können gemeinsam oder unabhängig voneinander beispielsweise aus Aluminium, Stahlblech oder verzinktem Stahlblech gebildet sein. Der Metallschaum 6 im Hohlraum 5 ist nach dem Einbringen der Keramikkugeln und/oder Glaskugeln in den Hohlraum 5 durch Einspritzen von Zink in den Hohlraum 5 gebildet, wobei die äußere Außenfläche 1 des Wandbauteiles und die Zwischenwand 4 zwischen zwei an die Oberflächen der äußeren Außenfläche 1 und die Zwischenwand 4 angepasste, nicht dargestellte Formhälften eingelegt sind.

In Fig. 1 ist teilweise erkennbar, dass an der Zwischenwand 4 beispielsweise im Bodenbereich der nutförmigen Vertiefungen bzw. Vertiefungsdome 14, 16, 17 mehrere Gewindebolzen oder Gewindebuchsen 18, 19, 20, 21, 22 befestigt sind, an denen die innere Außenfläche 3 des Wandbauteiles zu befestigen ist, die beispielsweise eine Verkleidung bildet oder von einer nicht dargestellten Verkleidung überdeckt und mit ebenfalls nicht dargestellten Bedienelementen versehen ist. Ebenso können auf der zur Zwischenwand 4 gerichteten Seite der inneren Außenfläche 3 Aggregate angeordnet sein. In den Figuren ist nicht oder nicht ohne weiteres erkennbar, dass bei dem Ausführungsbeispiel die innere Außenfläche 3 des Wandbauteiles zusammen mit der Zwischenwand 4 einen oben offenen Schacht 23 bildet, in den eine höhenverstellbare Fensterscheibe zumindest bereichsweise abzusenken ist.

Die äußere Außenfläche 1 des Wandbauteiles und die Zwischenwand 4 bilden zusammen mit dem Metallschaum 6 eine vormontierte Baueinheit, die von einem Lieferanten vorgefertigt angeliefert werden kann. An der Zwischenwand 4 sind nicht dargestellte Montageelemente befestigt oder zu befestigen. Danach wurden auf der dem Fahrgastraum 2 zugewandten Seite der Zwischenwand 4 eine Fensterführung und ein oberes Verstärkungsprofil sowie eine Schlossbaueinheit und eine Fensterhebermechanik befestigt, die nicht dargestellt sind. Der Metallschaum 6 kann eine feste Verbindung mit der äußeren Außenfläche 1 und mit der Zwischenwand 4 eingehen, wodurch das Wandbauteil ein geringes Gewicht und eine hohe Festigkeit aufweist.

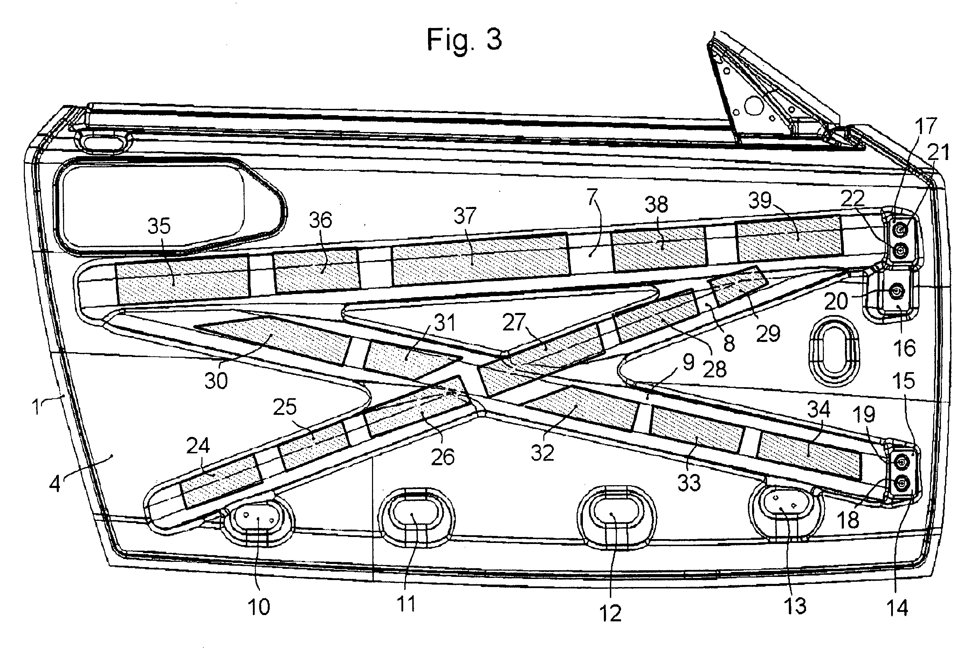

Ein in Fig. 3 dargestelltes Ausführungsbeispiel der vorliegenden Erfindung stimmt bis auf die nachfolgend beschriebenen Änderungen mit dem Vergleichsbeispiel überein. Zur Vermeidung einer wiederholten Beschreibung sind bei dem Vergleichsbeispiel und dem Ausführungsbeispiel gleiche oder vergleichbare Bauteile mit einer gleichen Bezugszahl versehen. Bei dem Ausführungsbeispiel ist der Metallschaum 6 im Hohlraum 5 ein Zinkschaum mit dem Metall Zink oder einer Zinklegierung. Der Metallschaum 6 ist durch Einlegen und Fixieren von in Festkörper 24, 25, 26, 27, 28, 29, 30, 31, 32, 33, 34, 35, 36, 37, 38, 39 gepresstem und mit Abständen voneinander jeweils in einem zugeordneten Bereich des Hohlraumes 5 bzw. genauer in den nutförmigen Vertiefungen 7, 8, 9 angeordnetem Zinkpulver, das mit einem bekannten Treibmittel, beispielsweise Zirkoniumhydrid, versehen ist, und einer anschließenden Erwärmung auf eine für die Bildung eines Zinkschaumes übliche Temperatur von beispielsweise 500 Grad Celsius zumindest nach einer anschließenden Abkühlung gebildet. Die Dichte bzw. Dichteverteilung des Metallschaumes 6 in dem Hohlraum 5 kann vorgegeben werden. Hiezu sind eventuell einige wenige Versuche erforderlich, die zeigen, wie sich die Dichteverteilung des Metallschaumes 6 einstellt, wenn in der Größe unterschiedlich gepresste Festkörper 24, 25, 26, 27, 28, 29, 30, 31, 32, 33, 34, 35, 36, 37, 38, 39 aus dem Metall Zink oder einer Zinklegierung und dem Treibmittel verwendet werden und außerdem die Abstände zwischen den gepressten Festkörpern 24, 25, 26, 27, 28, 29, 30, 31, 32, 33, 34, 35, 36, 37, 38, 39 verändert werden. Aus der bekannten Quellfähigkeit des verwendeten Metalls bei der Umwandlung des Metalls in den Metallschaum 6 und der vorgegebenen Dichteverteilung ist die erforderliche Masse für die gepressten Festkörper 24, 25, 26, 27, 28, 29, 30, 31, 32, 33, 34, 35, 36, 37, 38, 39 zu berechnen. Eine Erhöhung der Masse bewirkt eine größere Konzentration und damit eine größere Dichte des Metallschaumes 6. Damit bei der Umwandlung des Metalls in den ein größeres Volumen aufweisenden Metallschaum 6 die Luft zwischen den gepressten Festkörpern 24, 25, 26, 27, 28, 29, 30, 31, 32, 33, 34, 35, 36, 37, 38, 39 entweichen kann, sind zumindest kleine, nicht dargestellte Öffnungen vorzusehen, die von dem Hohlraum 5 nach außen führen. Dadurch können sich - beispielsweise bei Verwendung mehrerer gepresster Festkörper - die Metallschäume der Festkörper 24, 25, 26, 27, 28, 29, 30, 31, 32, 33, 34, 35, 36, 37, 38, 39 zu einem gemeinsamen Metallschaum 6 vereinigen, der die gewünschte Dichteverteilung oder eine gleichmäßige Dichte aufweist. Die Bildung des Metallschaumes 6 erzeugt in dem Hohlraum 5 einen Druck. Dieser ist von zumindest zwei Werkzeug-Formhälften aufgenommen, die einen Aufnahmeraum für die äußere Außenfläche 1 des Wandbauteiles und die Zwischenwand 4 sowie die dazwischen gelegten gepressten Festkörper 24, 25, 26, 27, 28, 29, 30, 31, 32, 33, 34, 35, 36, 37, 38, 39 aus dem Metall Zink oder einer Zinklegierung und das Treibmittel bilden und hierzu an die Oberflächen der äußeren Außenfläche 1 und die Zwischenwand 4 angepasst sind.

Das Vergleichsbeispiel und das Ausführungsbeispiel sind abweichend ausführbar. Das verstärkte Wandbauteil kann ein beliebiges, beispielsweise bei einem Fahrzeug oder Flugzeug eine Außenwand bildendes Bauteil sein. Die Größe und Form des eine metallische Füllung aufnehmenden Hohlraumes und der Zwischenwand sowie die Größe und Form des Wandbauteiles sind vorgebbar. Zur Versteifung des Wandbauteiles bei einer geringen Masse des für die metallische Füllung verwendeten Metalls oder einer Metalllegierung ist in der Zwischenwand zumindest eine zu der inneren Außenfläche gerichtete nutförmige Vertiefung ausgebildet, die einen beliebigen Querschnitt und in Längsrichtung einen beliebigen Verlauf aufweisen kann. Jede Vertiefung kann in Längsrichtung eine gleiche oder veränderliche Nuttiefe aufweisen, wobei die metallische Füllung nach seiner Bildung in die nutförmige Vertiefung eingedrungen ist. Die nutförmigen Vertiefungen können in Seiten- und/oder Höhenrichtung einen Abstand voneinander aufweisen oder an Verbindungsbereichen oder Kreuzungsbereichen eine gemeinsame Vertiefung bilden. Die Verbindungen der äußeren Außenfläche mit der Zwischenwand und der äußeren Außenfläche oder Zwischenwand mit der inneren Außenfläche können jeweils auf eine beliebige, beispielsweise bekannte Weise lösbar oder unlösbar ausgeführt werden. Unabhängig davon, ob in den Metallschaum kleine hohle Keramikkugeln oder Glaskugeln eingebracht sind oder nicht, kann eine Füllung des Hohlraumes mit einem Metall oder einer Metalllegierung auch durch eine etwas umständlichere Schüttbefüllung oder durch Einfüllen des Metalls oder der Metalllegierung in flüssiger Form erfolgen. Die metallische Füllung kann durch einen Metallschaum gebildet sein, der ein zur Bildung eines Metallschaumes geeignetes Metall oder eine Metalllegierung, beispielsweise Zink oder Aluminium enthalten kann. Vorzugsweise ist das Metall Zink oder eine Zinklegierung. Die metallische Füllung kann im Wesentlichen ein Zinkschaum oder Aluminiumschaum sein, in den beispielsweise kleine hohle Keramikkugeln oder Glaskugeln eingebettet sind. Ebenso kann die metallische Füllung mit im Wesentlichen Zink oder Aluminium vergossene kleine hohle Keramikkugeln oder Glaskugeln oder mit im Wesentlichen Zink oder Aluminium umschäumte kleine hohle Keramikkugeln oder Glaskugeln enthalten. Zum Umschäumen der kleinen hohlen Keramikkugeln oder Glaskugeln mit im Wesentlichen Zink oder Aluminium zur Bildung der metallischen Füllung können die in den Hohlraum eingebrachten Keramikkugeln oder Glaskugeln zusammen mit der äußeren Wandfläche und der Zwischenwand und gegebenenfalls dem Formkörper beispielsweise auf ca. 500 Grad Celsius erwärmt sein. Anschließend kann beispielsweise eine Vorrichtung vorübergehend mit der Zwischenwand verbunden sein, die einen über eine Durchtrittsöffnung mit dem Hohlraum verbundenen Aufnahmeraum aufweist, in dem sich eine metallische Masse befindet, die nach dem Einbringen der Vorrichtung und der äußeren Außenfläche und der Zwischenwand sowie den im Hohlraum befindlichen Keramikkugeln oder Glaskugeln in einen Ofen zur Erwärmung beispielsweise auf ca. 500 Grad Celsius zu einem Metallschaum aufschäumt, der über die Durchtrittsöffnung in den Hohlraum des Wandbauteiles gelangt. Die metallische Füllung kann im Wesentlichen das Metall Zink oder eine Zinklegierung oder Aluminium oder eine Aluminiumlegierung enthalten. Dabei kann das Metall nach dem Einbringen der Keramikkugeln und/oder Glaskugeln in den Hohlraum durch Einspritzen von Zinkschaum oder Aluminiumschaum in den Hohlraum gebildet sein, wobei die äußere Außenfläche des Wandbauteiles und die Zwischenwand zwischen zwei an die Oberflächen der äußeren Außenfläche und die Zwischenwand angepasste Formhälften eingelegt sein kann. Ebenso kann das Metall nach dem Einbringen der Keramikkugeln und/oder Glaskugeln sowie gegebenenfalls des Formkörpers in den Hohlraum in erwärmter, flüssiger Form in den Hohlraum eingefüllt sein. Eventuell sind zuvor die in den Hohlraum eingebrachten Keramikkugeln oder Glaskugeln zusammen mit der äußeren Wandfläche und der Zwischenwand und gegebenenfalls dem Formkörper beispielsweise auf ca. 500 Grad Celsius in einem Ofen erwärmt. Zumindest nach einer Abkühlung schließt das Metall die Keramikkugeln und/oder Glaskugeln ein. Die äußere Außenfläche des Wandbauteiles und/oder die Zwischenwand und/oder die innere Außenfläche sind beispielsweise aus Aluminium, Stahlblech oder verzinktem Stahlblech oder einem anderen Material gefertigt. Zur Gewichtserleichterung können diese Teile auch aus einem anderen Material, beispielsweise die innere Außenfläche aus einer Kohlefaser gefertigt sein. Der Raum zwischen der Zwischenwand und der inneren Außenfläche nimmt im Normalfall keine metallische Füllung auf. In diesem Raum können Bauteile bzw. Aggregate angeordnet sein. In von dem Normalfall abweichenden Fällen, beispielsweise bei extremen Belastungen des Wandbauteiles kann in dem Raum zwischen der Zwischenwand und der inneren Außenfläche eine metallische Füllung angeordnet sein, die der metallischen Füllung im Hohlraum entsprechen oder durch eine andere Füllung gebildet sein kann. Vorzugsweise bildet die äußere Außenfläche des Wandbauteiles und die Zwischenwand zusammen mit der metallischen Füllung eine vormontierte Baueinheit, die als fertiges Modulteil von einem externen Lieferanten bezogen werden kann. An diesem Modulteil können beliebige Bauteile bereits montiert oder vormontiert sein. Die innere Außenfläche kann ebenfalls als fertiges oder nahezu fertiges weiteres Modulteil von einem externen Lieferanten bezogen werden. An diesem weiteren Modulteil können weitere Bauteile bzw. Aggregate montiert oder vormontiert sein, wodurch sich der eigene Fertigungsaufwand bei der Fertigung des Wandbauteiles wesentlich vermindert und hierfür lediglich wenige Werkzeuge erforderlich sind. Ist das Wandbauteil wie bei dem Vergleichsbeispiel und dem Ausführungsbeispiel eine seitliche Fahrzeugtür, so kann diese ohne Festigkeitseinbußen eine nach der Rohbaufertigung beispielsweise gegenüber einer konventionell gefertigten Fahrzeugtür von 18 kg auf 10 kg verminderte geringere Masse aufweisen. Die Erfindung erhöht beispielsweise die passive Sicherheit eines Kraftfahrzeugs, bei dem das verstärkte Wandbauteil eine seitliche Fahrzeugtür bildet, da das verstärkte Wandbauteil einem seitlichen Aufprall beispielsweise eines anderen Fahrzeugs auf die Fahrzeugtür vom Aufprall an über den gesamten zu erwartenden Verformungsweg der Fahrzeugtür bzw. der äußeren Außenfläche etwa gleichmäßig widersteht und nicht erst nach einer anfänglichen Biegeverformung des Türaußenblechs wie bei einem konventionellen Fahrzeug. Es ist deshalb beispielsweise bei einer Realisierung der Erfindung an einer seitlichen Fahrzeugtür möglich, einen seitlichen Airbag ohne Sicherheitseinbuße wegzulassen.

## Patentansprüche

1. Verstärktes Wandbauteil, insbesondere für ein Kraftfahrzeug, das eine äußere (1) und eine innere Außenfläche (3) und dazwischen einen Hohlraum (5) aufweist, in den eine metallische Füllung (6) eingebracht ist, wobei der Hohlraum (5) zwischen der äußeren Außenfläche (1) und einer zwischen der äußeren (1) und der inneren Außenfläche (3) angeordneten Zwischenwand (4) ausgebildet ist, die im Wesentlichen gerade oder gekrümmt etwa parallel zur äußeren (1) und/oder inneren Außenfläche (3) verläuft, und in der Zwischenwand (4) zumindest zwei zu der inneren Außenfläche (3) gerichtete nutförmige Vertiefungen (8, 9) ausgebildet sind, die eine vorgegebene Längserstreckung mit einer gleichen oder veränderlichen Nuttiefe aufweisen, und die metallische Füllung (6) in die nutförmigen Vertiefungen (8, 9) eingedrungen ist, **dadurch gekennzeichnet, dass** sich die nutförmigen Vertiefungen (8, 9) kreuzen und in dem Kreuzungsbereich eine gemeinsame Vertiefung bilden und, dass die metallische Füllung (6) das Metall Zink oder eine Zinklegierung oder Aluminium oder eine Aluminiumlegierung enthält und durch Einlegen und Fixieren von in wenigstens einen Festkörper (24, 25, 26, 27, 28, 29, 30, 31, 32, 33, 34, 35, 36, 37, 38, 39) gepresstem und in einem zugeordneten Bereich des Hohlraumes (5) bzw. wenigstens einer nutförmigen Vertiefung (8, 9) angeordnetem Zinkpulver oder Aluminiumpulver, das mit einem bekannten Treibmittel, beispielsweise Zirkoniumhydrid, versehen ist und einer anschließenden Erwärmung auf eine für die Bildung eines Metallschaumes (6) mit Zink oder Aluminium übliche Temperatur zumindest nach einer anschließenden Abkühlung gebildet ist.

2. Wandbauteil nach Patentanspruch 1, **dadurch gekennzeichnet, dass** in der Zwischenwand (4) mehrere jeweils zu der inneren Außenfläche (3) gerichtete nutförmige Vertiefungen (7, 8, 9) ausgebildet sind, die in Seiten- und/oder Höhenrichtung einen Abstand voneinander aufweisen oder die an Verbindungsbereichen eine gemeinsame Vertiefung bilden.

3. Wandbauteil nach Patentanspruch 1 oder 2, **dadurch gekennzeichnet, dass** in der Zwischenwand (4) durch wenigstens eine kegelstumpfförmige oder zylindrische Vertiefung mit kreisförmigem oder elliptischem Querschnitt wenigstens ein zur inneren Außenfläche (3) gerichteter Vertiefungsdom (10, 11, 12, 13, 14, 15, 16, 17) gebildet ist.

4. Wandbauteil nach einem der Patentansprüche 1 bis 3, **dadurch gekennzeichnet, dass** das Wandbauteil eine seitliche Fahrzeugtür eines Kraftfahrzeugs ist und die äußere Außenfläche (1) des Wandbauteils eine Außenseite und die innere Außenfläche (3) des Wandbauteils eine dem Fahrgastraum (2) des Kraftfahrzeugs zugewandte Innenseite jeweils der Fahrzeugtür bilden.

5. Wandbauteil nach Patentanspruch 4, **dadurch gekennzeichnet, dass** im oberen Bereich der Zwischenwand (4) eine etwa in Fahrzeuglängsrichtung verlaufende, zur inneren Außenfläche (3) gerichtete nutförmige Vertiefung (7) und darunter zwei sich etwa in der Flächenmitte der Zwischenwand (4) sich kreuzende, zur inneren Außenfläche (3) gerichtete nutförmige Vertiefungen (8, 9) ausgebildet sind, die etwa im unteren Bereich der Zwischenwand (4) enden und jeweils an ihrem oberen Bereich in die etwa in Fahrzeuglängsrichtung verlaufende Vertiefung (7) münden.

6. Wandbauteil nach einem der Patentansprüche 1 bis 5, **dadurch gekennzeichnet, dass** die äußere Außenfläche (1) des Wandbauteiles und die Zwischenwand (4) jeweils am Außenumfang aneinander anliegen und/oder beispielsweise durch Umbördelung eines Umfangsbereiches der äußeren Außenfläche (1) um den äußeren Umfangbereich der Zwischenwand (4) herum miteinander verbunden sind.

7. Wandbauteil nach einem der Patentansprüche 1 bis 6, **dadurch gekennzeichnet, dass** die metallische Füllung (6) im Wesentlichen ein Zinkschaum oder Aluminiumschaum ist und/oder die äußere Außenfläche (1) des Wandbauteiles und/oder die Zwischenwand (4) oder zusätzlich die innere Außenfläche (3) des Wandbauteiles aus Aluminium, Stahlblech oder verzinktem Stahlblech gebildet ist bzw. sind.

8. Wandbauteil nach einem der Patentansprüche 1 bis 7, **dadurch gekennzeichnet, dass** vor dem Einbringen der metallischen Füllung (6) und/oder gegebenenfalls des Metallschaumes (6) jeweils in den Hohlraum (5) und/oder gegebenenfalls der Bildung eines Metallschaumes (6) im Hohlraum (5) die äußere Außenfläche (1) des Wandbauteiles und die Zwischenwand (4) zwischen zwei an die Oberflächen der äußeren Außenfläche (1) und die Zwischenwand (4) angepasste Formhälften eingelegt sind.

9. Wandbauteil nach einem der Patentansprüche 1 bis 8, **dadurch gekennzeichnet, dass** an der Zwischenwand (4) beispielsweise im Bodenbereich wenigstens einer nutförmigen Vertiefung (7, 8, 9) wenigstens ein Gewindebolzen oder eine Gewindebuchse (18, 19, 20, 21, 22) befestigt ist, an der die innere Außenfläche (3) des Wandbauteiles zu befestigen ist, die beispielsweise eine Verkleidung bildet oder von einer Verkleidung überdeckt und mit Bedienelementen versehen und beispielsweise auf der zur Zwischenwand (4) gerichteten Seite mit Aggregaten verbunden ist, oder zusätzlich die Außenfläche (1) des Wandbauteiles zusammen mit der Zwischenwand (4) einen oben offenen Schacht (23) bildet, in den eine höhenverstellbare Fensterscheibe zumindest bereichsweise absenkbar ist.

10. Wandbauteil nach einem der Patentansprüche 4 bis 9, **dadurch gekennzeichnet, dass** die äußere Außenfläche (1) des Wandbauteiles und die Zwischenwand (4) zusammen mit der metallischen Füllung (6) eine vormontierte Baueinheit bilden und/oder an der Zwischenwand (4) Montageelemente befestigt sind oder werden und/oder auf der dem Fahrgastraum (2) zugewandten Seite der Zwischenwand (4) eine Fensterführung und/oder ein oberes Verstärkungsprofil und/oder eine Schlossbaueinheit und/oder eine Fensterhebermechanik und/oder andere Funktionsteile wie beispielsweise Scharniere oder eine Türbremse befestigt sind.

## Claims

1. A reinforced wall component, especially for a motor vehicle, comprising an outer (1) and an inner (3) surface and between them a cavity (5) in which a metal filling (6) is inserted, wherein the cavity (5) is formed between the outer surface (1) and a partition (4) disposed between the outer (1) and the inner (3) surface and is straight or curved and extends substantially parallel to the outer (1) and/or inner (3) surface, and at least two groove-like recesses (8, 9) extending towards the inner surface (3) are formed in the partition (4) and have a set length and the same or different depth, and the metal filling (6) is pressed into the groove-like recesses (8, 9), **characterised in that** the groove-like recesses (8, 9) intersect and form a common recess in the intersecting region and that the metal filling (6) contains metallic zinc or a zinc alloy or aluminium or an aluminium alloy, and by zinc powder or aluminium powder pressed by insertion and fixing in at least one solid member (24, 25, 26, 27, 28, 29, 30, 31, 32, 33, 34, 35, 36, 37, 38, 39) and disposed in an associated region of the cavity (5) or in at least one groove-like recess (8, 9), the powder being added to a known foaming agent, e.g. zirconium hydride, and subsequently heated to a conventional temperature for forming a metal foam (6) with zinc or aluminium, at least after subsequent cooling.

2. A wall component according to claim 1, **characterised in that** in the partition (4) a number of groove-like recesses (7, 8, 9) are formed extending towards the inner surface (3) and are vertically or horizontally separated or form a common recess at the connecting regions.

3. A wall component according to claim 1 or claim 2, **characterised in that** at least one dome-shaped recess (10, 11, 12, 13, 14, 15, 16, 17) extending towards the inner surface (3) is formed by at least one frusto-conical or cylindrical recess having a circular or elliptical cross-section in the partition.

4. A wall component according to any of claims 1 to 3, **characterised in that** 5 the wall component is a side door of a motor vehicle and the outer surface (1) of the wall component has an outside and the inner surface (3) of the wall component forms the inside of the door facing the passenger compartment (2) of the vehicle.

5. A wall component according to claim 4, **characterised in that** a groove-like recess (7) extending in the longitudinal direction of the vehicle towards the inner surface (3) is formed in the top region of the partition (4) and two groove-like recesses (8, 9) intersecting approximately in the middle of the partition (4) and directed towards the inner surface (3) are formed ending approximately in the bottom region of the partition (4) and the top region of each opens into the recess (7) extending approximately in the longitudinal direction of the vehicle.

6. A wall component according to any of claims 1 to 5, **characterised in that** the outer surface (1) of the wall component abuts the partition (4) at the outer periphery and/or the two are connected e.g. by flanging a peripheral region of the outer surface (1) around the outer peripheral region of the partition (4).

7. A wall component according to any of claims 1 to 6, **characterised in that** the metal filling (6) is substantially a zinc foam or aluminium foam and/or the outer surface (1) of the wall component and/or the partition (4) or additionally the inner surface (3) of the wall component are made of aluminium, sheet steel or galvanised sheet steel.

8. A wall component according to any of claims 1 to 7, **characterised in that** before the metal filling (6) and/or the metal foam (6) is introduced into the cavity (5) and, if required, before a metal foam (6) is formed in the cavity (5), the outer surface (1) of the wall component and the partition (4) are 5 inserted between two half-moulds adapted to the contours of the outer surface (1) and the partition (4).

9. A wall component according to any of claims 1 to 8, **characterised in that** at least one screw-threaded bolt or screw-threaded socket (18, 19, 20, 21, 22) is fastened to the partition, e.g. in the floor region of at least one groove-like recess (7, 8, 9) and is fastened to the inner surface (3) of the wall component, which e.g. forms a lining or is covered by a lining and comprises operating elements and is connected to units e.g. on the side facing the partition (4) or additionally the outer surface (1) of the wall component together with the partition (4) form an upwardly open shaft (23) for lowering a vertically adjustable window pane, at least partly.

10. A wall component according to any of claims 4 to 9, **characterised in that** the outer surface (1) of the wall component and the partition (4), together with the metal filling (6), form a pre-assembled structural unit and assembly elements are fastened to the partition (4), a window guide and/or a top reinforcing profile and/or a lock unit and/or a window-winding mechanism and/or other functional parts such as hinges or a door brake are fastened to and/or are on the side facing of the partition (4) the passenger compartment (2).

## Revendications

1. Elément de paroi renforcé en particulier pour un véhicule qui comporte une face externe (1) et une face interne (3) et entre ces faces, un volume creux (5) dans lequel est introduit un rembourrage métallique (6), le volume creux (5) étant formé entre la face externe (1) et une paroi intermédiaire (4) située entre la face externe (1) et la face interne (3), qui s'étend, essentiellement linéairement ou en courbe parallèlement à la face externe (1) et/ou à la face interne (3), et, dans la paroi intermédiaire (4) sont au moins formées deux cavités (8, 9) en forme de rainures dirigées vers la face interne (3), qui ont une extension longitudinale prédéfinie avec une profondeur de rainure identique ou variable, et, le rembourrage métallique (6) est introduit dans les cavités (8, 9) en forme de rainures,
**caractérisé en ce que**
les cavités en forme de rainures se croisent et forment dans la zone de croisement une cavité commune, et le rembourrage métallique (6) renferme du zinc ou un alliage de zinc ou de l'aluminium ou un alliage d'aluminium, et, est formé par insertion et fixation de poudre de zinc ou de poudre d'aluminium qui renferme un agent porogène connu par exemple de l'hydroxyde de zirconium, comprimée en au moins un corps solide (24, 25, 26, 27, 28, 29, 30, 31, 32, 33, 34, 35, 36, 37, 38, 39) et positionnée dans une zone associée du volume creux (5) ou d'au moins une cavité en forme de rainure (8, 9), suivies d'un chauffage à une température usuelle pour la formation d'une mousse métallique (6) avec du zinc ou de l'aluminium au moins après un refroidissement.

2. Elément de paroi conforme à la revendication 1,
**caractérisé en ce que**
sont réalisées dans la paroi intermédiaire (4) plusieurs cavités (7, 8, 9) en forme de rainures respectivement dirigées vers la face interne (3), qui sont écartées les unes des autres dans la direction latérale et/ou dans la direction de la hauteur ou qui forment une cavité commune au niveau des zones de liaison.

3. Elément de paroi conforme à la revendication 1 ou 2,
**caractérisé en ce que**
dans la paroi intermédiaire (4) est formé par au moins une cavité en forme de tronc de cône ou cylindrique avec une section circulaire ou elliptique au moins un dôme évidé (10, 11, 12, 13, 14, 15, 16, 17) dirigé vers la face interne (3).

4. Elément de paroi conforme à l'une des revendications 1 à 3,
**caractérisé en ce que**
l'élément de paroi est une porte latérale de véhicule et la face externe (1) de cet élément de paroi constitue le côté externe de cette porte tandis que la face interne (3) de celui-ci constitue le côté interne de cette porte tourné vers l'habitacle du véhicule (2).

5. Elément de paroi conforme à la revendication 4,
**caractérisé en ce que**
sont formées dans la zone supérieure de la paroi intermédiaire (4) une cavité (7) en forme de rainure s'étendant essentiellement dans la direction longitudinale du véhicule et dirigée vers la face interne (3), et, au-dessous, deux cavités (8, 9) en forme de rainures se croisant essentiellement au milieu de la surface de la paroi intermédiaire (4) et dirigées vers la face interne (3) qui se terminent essentiellement dans la zone inférieure de la paroi intermédiaire (4) et débouchent respectivement dans leurs zones supérieures dans la cavité (7) s'étendant essentiellement dans la direction longitudinale du véhicule.

6. Elément de paroi conforme à l'une des revendications 1 à 5,
**caractérisé en ce que**
la face externe (1) de l'élément de paroi et la paroi intermédiaire (4) s'appliquent respectivement l'une sur l'autre sur leur périphérie externe, et/ou sont reliées entre elles par exemple par rabattement d'une zone périphérique de la face externe (1) autour de la zone périphérique externe de la paroi intermédiaire (4).

7. Elément de paroi conforme à l'une des revendications 1 à 6,
**caractérisé en ce que**
le rembourrage métallique (6) est essentiellement constitué par une mousse de zinc ou une mousse d'aluminium et/ou la face externe (1) de l'élément de paroi et/ou la paroi intermédiaire (4) ou en outre la face interne (3) de l'élément de paroi est ou sont réalisée(s) en aluminium, en tôle d'acier ou en tôle d'acier galvanisé.

8. Elément de paroi conforme à l'une des revendications 1 à 7,
**caractérisé en ce que**
avant l'insertion du rembourrage métallique (6) et/ou le cas échéant de la mousse métallique (6), dans le volume creux (5) et/ou le cas échéant la formation d'une mousse métallique (6) dans le volume creux (5), la face externe (1) de l'élément de paroi et la paroi intermédiaire (4) sont insérées entre deux moitiés de moule adaptées aux surfaces de cette face externe (1) et de cette paroi intermédiaire (4).

9. Elément de paroi conforme à l'une des revendications 1 à 8,
**caractérisé en ce que**
sur la paroi intermédiaire (4), par exemple dans la zone du fond d'au moins une cavité (7, 8, 9) en forme de rainure, est fixé au moins un goujon fileté et/ou une douille filetée (18, 19, 20, 21, 22) sur lequel ou laquelle doit être fixée la face interne (3) de l'élément de paroi, qui forme par exemple un habillage, ou est recouverte d'un habillage et est équipée d'éléments d'actionnement, et est par exemple reliée à des ensembles sur le côté tourné vers la paroi intermédiaire (4), ou, en outre la face externe (1) de l'élément de paroi forme avec la paroi intermédiaire (4) un puits (23) ouvert vers le haut dans lequel peut être descendue au moins par zones une vitre de fenêtre réglable en hauteur.

10. Elément de paroi conforme à l'une des revendications 4 à 9,
**caractérisé en ce que**
la face externe (1) de l'élément de paroi et la paroi intermédiaire (4) forment avec le rembourrage métallique (6) une unité pré-montée, et/ou des éléments de montage sont ou seront fixés sur la paroi intermédiaire (4) et/ou sur le côté de la paroi intermédiaire (4) tournée vers l'habitacle du véhicule (2) est ou sont flxé(s) un élément de guidage de fenêtre et/ou un profilé de rigidification supérieur, et/ou un ensemble de serrure et/ou un mécanisme de levage de fenêtre et/ou d'autres éléments fonctionnels tels que par exemple une charnière ou un frein de porte.
